# DEMANDE DE BREVET EUROPEEN

(11) **EP 2 336 499 A1**
(43) Date de publication de la demande: **22.06.2011**
(21) Numéro de dépôt: 09179747.2
(22) Date de dépôt: 17.12.2009
(51) Int. Cl.: F01D 19/00, F01D 25/10, F02C 7/26

(54) **Procédure de démarrage à froid d'un moteur**

(71) Demandeur: Techspace Aero S.A., 4041 Herstal (BE)
(72) Inventeur: Raimackers, Nicolas, B-4263, Tourinne (BE); Borbuse, Cécric, B-4560, Clavier Village (BE)
(74) Mandataire: pronovem

(57) **Abrégé**

La présente invention se rapporte à une méthode pour le démarrage d'un moteur aéronautique comprenant une phase de démarrage à froid, ledit moteur comprenant une installation de lubrification et/ou de refroidissement munie d'un actionneur entraînant un ensemble de pompes, regroupées dans un même équipement appelé groupe de lubrification ou GdL, ladite méthode étant caractérisée en ce que,
- dans la phase de démarrage à froid du moteur, le Gdl est piloté à couple constant,
- après la phase de démarrage à froid du moteur, le GdL est piloté en fonction d'un paramètre moteur.

## Description

### Objet de l'invention

La présente invention s'inscrit dans le domaine technique des moteurs d'avion. Elle se rapporte plus particulièrement à une procédure de démarrage à froid d'un moteur d'avion et à une installation de lubrification et/ou de refroidissement mettant en oeuvre cette procédure.

### Etat de la technique

Le système de lubrification d'un moteur d'avion a pour principaux objectifs de refroidir et lubrifier différents composants du moteur en faisant circuler de l'huile. Cette circulation d'huile est généralement assurée par plusieurs pompes regroupées dans un même équipement appelé groupe de lubrification (GdL). La température de cette huile peut varier de -55°C jusqu'à +160-200°C. Il est connu que, sur toute la plage de température, la viscosité de l'huile varie fortement, générant un couple de charge du GdL variant de l'ordre d'un facteur 5 entre les très basses températures et la température ambiante. Le GdL à transmission mécanique, accouplé au réducteur de vitesse ('Gearbox'), tourne à une vitesse proportionnelle à la vitesse de rotation du moteur et doit donc pouvoir vaincre ce couple de charge quelle que soit la température. Dès lors, le dimensionnement mécanique du GdL doit prendre en compte le couple élevé lors du démarrage à froid.

Dans le cadre de l'électrification des GdL où la transmission mécanique du réducteur de vitesse aux éléments pompants du GdL a été remplacée par un actionneur électrique, le dimensionnement de l'actionneur électrique adapté aux conditions de démarrage à froid engendre une masse relativement importante de cet actionneur. Afin de limiter la masse de celui-ci qui est liée au couple moteur à fournir, il est intéressant de limiter ce couple moteur à développer par l'actionneur électrique et donc le couple moteur à fournir lors du démarrage à froid. En effet, en dehors du démarrage à froid du moteur, la température de l'huile en fonctionnement normal, c'est-à-dire durant la mission, est toujours supérieure à 0°C.

La problématique du démarrage à froid et du surdimensionnement qui en découle est traitée dans plusieurs documents de l'état de la technique.

Le document WO-A-2008/142287 décrit un système et une méthode pour le démarrage d'un turbomoteur par temps froid. La méthode consiste à transférer au fluide hydraulique (huile) du circuit de lubrification du turbomoteur au moins une partie de l'énergie dissipée par le démarreur électrique. Ainsi, l'huile est réchauffée par le démarreur électrique au moment du démarrage par temps froid, de sorte que la viscosité du fluide est réduite, ce qui diminue le couple résistif engendré par ce dernier. Il en résulte que les temps de démarrage, le dimensionnement des démarreurs et les risques d'avortement de démarrage sont également réduits.

On peut aussi citer le document US 2007/0234739 A1 qui décrit un appareil et une méthode de démarrage à froid d'un turbomoteur où un contrôleur optimise la distribution d'énergie entre un générateur-démarreur et un moteur électrique entraînant une pompe de lubrification, de manière à limiter la taille de la source d'énergie, par exemple une batterie. Un capteur mesure la température de l'huile: si cette dernière est inférieure à une température donnée, le contrôleur est activé et va prioritairement envoyer l'énergie vers le générateur-démarreur et ce tant que le couple développé par ce dernier est négatif. Quand le couple développé devient positif, l'excès de puissance est alors envoyé vers le moteur électrique alimentant la pompe de lubrification. Si la température de l'huile est supérieure à la température donnée, le contrôleur n'est pas activé et l'énergie est directement envoyée vers le moteur électrique.

### Buts de l'invention

La présente invention vise à fournir une solution à la problématique du démarrage à froid et du surdimensionnement qui en découle.

Plus précisément, la présente invention vise à fournir une méthode de démarrage à froid d'un moteur permettant de limiter la masse de l'actionneur, et en particulier de l'actionneur électrique et de l'ensemble de la chaîne cinématique, pour le pilotage d'un GdL.

### Résumé de l'invention

La présente invention se rapporte à une méthode pour le démarrage d'un moteur aéronautique comprenant une phase de démarrage à froid, ledit moteur comprenant une installation de lubrification et/ou de refroidissement munie d'un actionneur entraînant un ensemble de pompes, regroupées dans un même équipement appelé groupe de lubrification ou GdL, ladite méthode étant caractérisée en ce que,
- dans la phase de démarrage à froid du moteur, le Gdl est piloté à couple constant,
- après la phase de démarrage à froid du moteur, le GdL est piloté en fonction d'un paramètre moteur.

Selon des modes particuliers de l'invention, la méthode comporte au moins une ou une combinaison appropriée des caractéristiques suivantes :
- le paramètre moteur est la vitesse de rotation du moteur ;
- le basculement du mode de pilotage en couple constant vers le mode de pilotage fonction d'un paramètre moteur s'effectue lorsque le moteur tourne à une valeur de vitesse donnée choisie comme consigne ;
- le basculement du mode de pilotage en couple constant vers le mode de pilotage fonction d'un paramètre moteur s'effectue après un temps prédéfini ;
- le basculement du mode de pilotage en couple constant vers le mode de pilotage fonction d'un paramètre moteur s'effectue lorsque la température du fluide de lubrification et/ou de refroidissement dépasse une valeur limite ;
- le couple constant est égal au couple maximum développé lorsque le moteur est en régime.

La présente invention se rapporte également à une installation de lubrification et/ou de refroidissement dans un moteur aéronautique comprenant un actionneur entraînant un ensemble de pompes, regroupées dans un même équipement appelé groupe de lubrification ou GdL, ledit actionneur étant dimensionné sur base du couple maximum à développer lorsque le moteur est en régime, ladite installation comprenant également des moyens de régulation configurés pour que l'actionneur développe un couple constant pendant le démarrage à froid et entraîne le GdL à une vitesse fonction d'un paramètre moteur en phase de fonctionnement nominal du moteur, c'est-à-dire lorsque le moteur est en régime, le point de basculement entre la phase de démarrage à froid et la phase de fonctionnement nominal étant défini par une valeur de consigne.

Selon des modes particuliers de l'invention, l'installation comporte au moins une ou une combinaison appropriée des caractéristiques suivantes :
- le paramètre moteur est la vitesse de rotation du moteur ;
- l'actionneur est électrique, pneumatique ou hydraulique ;
- la valeur de consigne est une vitesse donnée de rotation du moteur ou un temps prédéfini ;
- elle comprend en outre une sonde de température située dans le circuit de lubrification et/ou de refroidissement, permettant la comparaison de la température du fluide de lubrification et/ou refroidissement avec une valeur de consigne en vue de passer de la phase de démarrage à froid vers la phase de fonctionnement nominal.

### Description détaillée de l'invention

La présente invention se rapporte à une procédure de démarrage à froid d'un moteur d'avion et à l'installation mettant en oeuvre cette procédure. La méthode est plus particulièrement présentée ci-dessous pour un actionneur électrique mais la procédure selon l'invention peut également s'appliquer à d'autres types d'actionneurs tels que des actionneurs pneumatiques ou hydrauliques.

Il est connu que, lorsque l'huile du circuit de lubrification est à basse température, par exemple inférieure à -10°C, la viscosité est telle que l'huile ne circule pas dans le circuit. Par exemple, les injecteurs des roulements présentent une section de passage telle que la viscosité de l'huile ne permet pas à cette dernière de passer la restriction de l'injecteur ou, dans le cas d'une température plus proche de -10°C, l'huile est injectée sur les roulements mais sans atteindre les zones ciblées par l'injecteur en fonctionnement lors des missions. Les moteurs sont d'ailleurs dimensionnés pour être en rotation pendant plusieurs minutes sans présence d'huile pour lubrifier les roulements. Le moteur peut ainsi tenir sans huile quelques minutes à bas régime et une à deux minutes à plein régime.

La procédure de démarrage à froid selon l'invention repose sur ce dernier point et consiste à ne pas injecter un débit d'huile fonction d'un paramètre moteur tel que, par exemple, la vitesse du moteur mais plutôt à limiter la vitesse de rotation du GdL électrique et, par conséquent, le débit d'huile. Cette démarche repose, d'une part, sur le fait que les moteurs sont dimensionnés pour fonctionner sans huile pendant quelques minutes comme susmentionné et, d'autre part, sur le fait que, après le démarrage du moteur, la turbomachine va générer un flux de chaleur important par conduction et rayonnement qui va participer au réchauffement de l'huile. Des phénomènes locaux au niveau des éléments pompants participent également à un échauffement local de l'huile se propageant au sein du circuit d'huile. Il en résulte donc que le réchauffement de l'huile sera suffisant si la durée de la phase de démarrage à froid est suffisamment longue, même si le GdL tourne à une vitesse plus faible.

Selon la présente invention, le dimensionnement de la machine électrique et de la chaîne cinématique est réalisé sur le couple maximum à délivrer pendant la mission et non pas pendant le démarrage, c'est-à-dire pour une température d'huile supérieure à -10°C. Ce couple n'étant pas suffisant pour garantir la rotation à une vitesse proportionnelle à celle de la turbomachine, un mode de pilotage spécifique est imposé lors du démarrage à froid. Ce mode de pilotage spécifique lors du démarrage consiste en un mode de pilotage à couple constant, par exemple, avec un couple égal au couple maximum tel que défini plus haut, en lieu et place d'un pilotage en vitesse. Ceci n'est possible qu'en cas de découplage de la vitesse de rotation du GdL et de celle de la turbomachine, par exemple à l'aide d'un actionneur électrique tel que présenté ici ou à l'aide d'un actionneur pneumatique, hydraulique ou par l'intégration d'un limiteur de couple. Ensuite, le mode spécifique de pilotage à couple constant bascule vers un mode de fonctionnement nominal où le GdL est piloté en fonction d'un paramètre moteur. Pour le basculement du mode de pilotage à couple constant vers le mode de pilotage fonction d'un paramètre moteur tel que la vitesse, différents critères peuvent être utilisés. Selon un premier critère, le basculement a lieu lorsqu'une vitesse de consigne du moteur est atteinte ; le couple est alors suffisant pour vaincre le couple résistif notamment généré par la viscosité de l'huile. Selon un deuxième critère, le basculement s'effectue après un temps donné, par exemple 10 minutes. Selon un troisième critère, le basculement s'effectue lorsque la température de l'huile dépasse une valeur limite, la température devant alors être mesurée par une sonde placée dans le circuit d'huile.

### Avantage de la méthode de démarrage selon l'invention

Grâce à la méthode de démarrage selon l'invention, le couple de dimensionnement est plus faible, il en résulte un gain de masse de 1"actionneur. Par exemple, dans le cas d'un actionneur électrique, les masses des éléments suivants sont limitées :
- moteur électrique,
- carter,
- électronique,
- l'ensemble de la chaîne cinématique.
   Si l'actionneur est pneumatique, hydraulique, etc., la procédure de démarrage à froid selon l'invention permet également un gain de masse mais dans une moindre mesure.

## Revendications

1. Méthode pour le démarrage d'un moteur aéronautique comprenant une phase de démarrage à froid, ledit moteur comprenant une installation de lubrification et/ou de refroidissement munie d'un actionneur entraînant un ensemble de pompes, regroupées dans un même équipement appelé groupe de lubrification ou GdL, ladite méthode étant **caractérisée en ce que**,
- dans la phase de démarrage à froid du moteur, le Gdl est piloté à couple constant,
- après la phase de démarrage à froid du moteur, le GdL est piloté en fonction d'un paramètre moteur.

2. Méthode selon la revendication 1, **caractérisée en ce que** le paramètre moteur est la vitesse de rotation du moteur.

3. Méthode selon la revendication 1 ou 2, **caractérisée en ce que** le basculement du mode de pilotage en couple constant vers le mode de pilotage fonction d'un paramètre moteur s'effectue lorsque le moteur tourne à une valeur de vitesse donnée choisie comme consigne.

4. Méthode selon la revendication 1 ou 2, **caractérisée en ce que** le basculement du mode de pilotage en couple constant vers le mode de pilotage fonction d'un paramètre moteur s'effectue après un temps prédéfini.

5. Méthode selon la revendication 1 ou 2, **caractérisée en ce que** le basculement du mode de pilotage en couple constant vers le mode de pilotage fonction d'un paramètre moteur s'effectue lorsque la température du fluide de lubrification et/ou de refroidissement dépasse une valeur limite.

6. Méthode selon l'une quelconque des revendications précédentes, **caractérisée en ce que** le

7. couple constant est égal au couple maximum développé lorsque le moteur est en régime.

8. Installation de lubrification et/ou de refroidissement dans un moteur aéronautique comprenant un actionneur entraînant un ensemble de pompes, regroupées dans un même équipement appelé groupe de lubrification ou GdL, ledit actionneur étant dimensionné sur base du couple maximum à développer lorsque le moteur est en régime, ladite installation comprenant également des moyens de régulation configurés pour que l'actionneur développe un couple constant pendant le démarrage à froid et entraîne le GdL à une vitesse fonction d'un paramètre moteur en phase de fonctionnement nominal du moteur, c'est-à-dire lorsque le moteur est en régime, le point de basculement entre la phase de démarrage à froid et la phase de fonctionnement nominal étant défini par une valeur de consigne.

9. Installation selon la revendication 7, **caractérisée en ce que** le paramètre moteur est la vitesse de rotation du moteur.

10. Installation selon la revendication 7, **caractérisée en ce que** l'actionneur est électrique, pneumatique ou hydraulique.

11. Installation selon la revendication 7, **caractérisée en ce que** la valeur de consigne est une vitesse donnée de rotation du moteur ou un temps prédéfini.
Installation selon la revendication 7, **caractérisée en ce qu'**elle comprend en outre une sonde de température située dans le circuit de lubrification et/ou de refroidissement,
permettant la comparaison de la température du fluide de
lubrification et/ou refroidissement avec une valeur de consigne en vue de passer de la phase de démarrage à froid
vers la phase de fonctionnement nominal.
